# EUROPEAN PATENT APPLICATION

(11) **EP 1 349 341 A2**
(43) Date of publication of application: **01.10.2003**
(21) Application number: 02258915.4
(22) Date of filing: 20.12.2002
(51) Int. Cl.: H04L 29/06

(54) **Domain name validation using mapping table**

(30) Priority: 28.02.2002 US 86490
(71) Applicant: Openwave Systems Inc., Redwood City, CA 94063 (US)
(72) Inventor: McMorris, Patrick, Belfast BT8 6GA (GB); McGinnity, Shaun, Belfast BT8 6YH (GB)
(74) Representative: W.P. Thompson & Co.

(57) **Abstract**

A method and apparatus for domain name validation are described. Data structure is maintained in a network node (130), the data structure includes a set of domain names and at least one alternative domain name corresponding to each domain name from the set of domain names, the network node is coupled to a wireless network (120) to and a wired network (140). The data structure is used to validate a domain name associated with an attempted access to a network site on the wired network by a mobile device (110) on the wireless network.

## Description

The present invention pertains to secure web communication technology. More particularly, the present invention relates to accessing a secure server via a Wireless Application Protocol (WAP) gateway.

With the rapid growth of Internet, more and more people are connected to the network and are comfortable utilizing a variety of services provided online. Some services offered by companies over the Internet such as purchasing goods, paying bills, banking, represent convenient and popular ways to perform daily tasks without leaving one's home. Thus, it is essential to ensure that certain sensitive data entered by the Internet users, such as credit card information, bank account numbers, is maintained in confidence and is not accessed and then utilized by people who were not the intended recipients of the information.

One of the security protocols, Secure Socket Layer (SSL) technology, has become the industry standard method for protecting web communications. The SSL security protocol provides features such as data encryption, server authentication, message integrity and optional client authentication for a TCP/IP connection. A web server that supports a security protocol, such as SSL, is called a secure server. Almost all major web browsers and web servers implement SSL, capabilities of which may be turned on by installing a digital certificate. Digital certificates along with the SSL technology are utilized to allow the information transmitted to and from the server to be protected from interception or tampering, i.e. "man-in-the-middle" attacks. A digital certificate on a server automatically communicates the site's authenticity to visitors' web browsers, confirming that the visitor is communicating with the intended site, not with a fraudulent site stealing credit card numbers or personal information.

Upon a user requesting contents of a site located on a secure server, a domain name validation process takes place. In order to prevent man-in-the-middle attacks, the user-entered domain name is compared to the domain name of a digital certificate transmitted by the secure server indicating its identity. A domain name is a name that identifies one or more IP addresses. For example, the domain name microsoft.com currently represents numerous IP addresses. Domain names are used in Uniform Resource Locators (URLs) to identify particular web pages. For example, in the URL http://www.yahoo.com/index.html, the domain name is yahoo.com.

In some instances the domain name validation process may fail even if the contacted server is the secure server containing contents of the requested site. This may occur when the user requests contents of a site located on the secure server through a WAP Gateway, which is a device that translates and converts between languages and protocols used on the wireless network, e.g., Wireless Markup Language (WML) and Wireless Application Protocol (WAP), and those used on the Internet, e.g., Hypertext Markup Language (HTML) and Hypertext Transfer Protocol (HTTP), and the domain name entered by the user does not match the domain name in the returned server certificate. For example, when the user is trying to access his/her email box via a wireless network by entering the URL https://www.hotmail.com, containing domain name hotmail.com, the domain validation process fails because the returned certificate is for the server to which the WAP gateway is connected, not for one of the servers associated with the domain name entered by the user. Another scenario when the domain validation process may fail is when the user, utilizing a mobile device, attempts to access a site, such as the Bank of Montreal site by entering its URL (e.g., https://www.bankofmontreal.com) and the returned certificate contains a more popular and easily entered domain name (e.g., bmo.com), which may lead users to the same site.

Some of the gateways linking wireless networks to wired networks attempt to solve the above problem by presenting an option of disabling the domain validation process, but this approach creates a risk of exposing the exchanged information to the man-in-the-middle attacks. Another solution that may be implemented in some gateways is to prompt the user to accept the mismatch of domain names. However, this solution requires an ordinary user with no knowledge of the domain validation process to have enough information about different domain names assigned to one secure server in order to make an informed decision. Ordinary users rarely have such information, making the solution impractical.

What is needed, therefore, is a solution which overcomes these and other shortcomings of the prior art.

The present invention includes a method and apparatus for domain name validation. The method comprises maintaining in a network node a data structure that includes a set of domain names and at least one alternative domain name corresponding to each domain name from the set of domain names, the network node coupled to a wireless network and a wired network, and using the data structure to validate a domain name associated with an attempted access to a network site on the wired network by a mobile device on the wireless network.

The present invention is illustrated by way of example and not limitation in the figures of the accompanying drawings, in which like references indicate similar elements and in which:

Figure 1 illustrates a network environment in which mobile devices may communicate with secure serves according to one embodiment of the present invention;

Figure 2 illustrates contents of a proxy gateway according to one embodiment of the present invention;

Figure 3 is a flow diagram showing a domain name validation process utilizing a mapping table according to one embodiment of the present invention;

Figure 4 illustrates the mapping table according to one embodiment of the present invention;

Figure 5 illustrate the mapping table according to one embodiment of the present invention; and

Figure 6 illustrates a processing system according to one embodiment of the present invention.

A method and apparatus for domain name validation are described. Note that in this description, references to "one embodiment" or "an embodiment" mean that the feature being referred to is included in at least one embodiment of the present invention. Further, separate references to "one embodiment" in this description do not necessarily refer to the same embodiment; however, neither are such embodiments mutually exclusive, unless so stated and except as will be readily apparent to those skilled in the art. Thus, the present invention can include any variety of combinations and/or integrations of the embodiments described herein.

### Exemplary Architecture

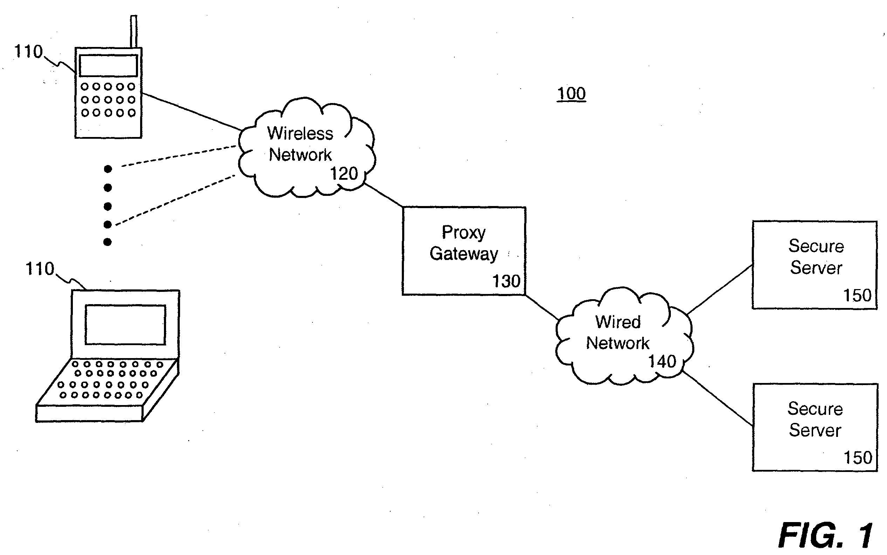

Figure 1 illustrates an exemplary network environment 100 in which the described method and apparatus may be implemented. A number of mobile devices 110, i.e. clients, may be connected to a wireless network 120. Each of the mobile devices may be, for example, a cellular telephone, personal digital assistant (PDA), notebook computer, two-way pager, or other wireless device. The wireless network 120 is connected to a wired network 140 via a proxy gateway 130. In one embodiment the wired network 140 is the Internet. Alternatively, the wired network could be a corporate intranet, a wide area network (WAN), a local area network (LAN), a public switched telephone network (PSTN), or a combination thereof.

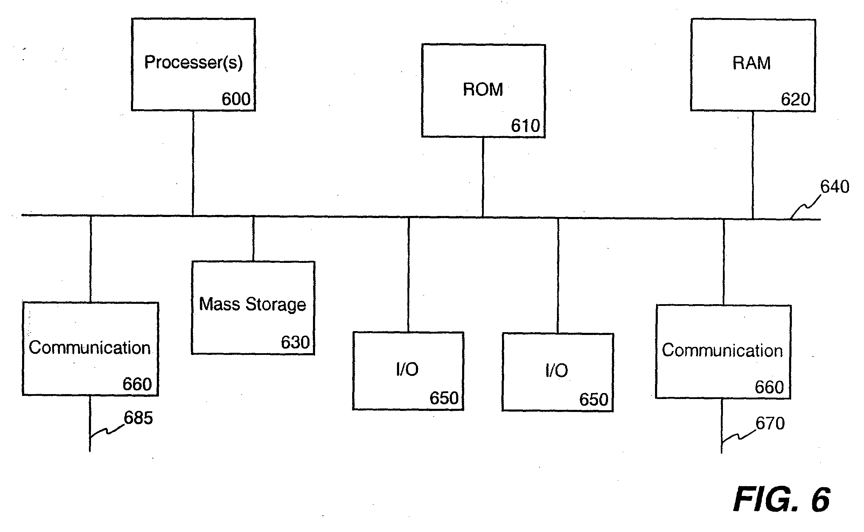

The proxy gateway 130, which can be a WAP gateway, enables communication between the mobile devices 110 and secure servers 150 of the wired network 140. The physical processing platforms which embody the proxy gateway 130 and the secure servers 150 located on the wired network 140 may include processing systems such as conventional personal computers (PCs) and/or server-class computer systems according to one embodiment of the domain validation system. Figure 6 illustrates an example of such a processing system at a high level. The processing system of Figure 6 may include one or more processors 600, read-only memory (ROM) 610, random access memory (RAM) 620, and a mass storage device 630 coupled to each other on a bus system 640. The bus system 640 may incude one or more buses connected to each other through various bridges, controllers and/or adapters, which are well known in the art. For example, the bus system 640 may include a 'system bus', which may be connected through an adapter to one or more expansion busses, such as a peripheral component interconnect (PCI) bus or an extended industry standard architecture (EISA) bus. Also coupled to the bus system 640 may be the mass storage device 630, one or more input/output (I/O) devices 650 and one or more data communication devices 660 to communicate with remote processing systems via one or more communication links 665 and 670, respectively. The I/O devices 650 may include, for example, any one or more of a display device, a keyboard, a pointing device (e.g., mouse, touchpad, trackball), an audio speaker.

The processor(s) 600 may include one or more conventional general-purpose or special-purpose programmable microprocessors, digital signal processors (DSPs), application specific integrated circuits (ASICs), or programmable logic devices (PLD), or a combination of such devices. The mass storage device 530 may include any one or more devices suitable for storing large volumes of data in a non-volatile manner, such as magnetic disk or tape, magneto-optical storage device, or any of various types of Digital Video Disk (DVD) or Compact Disk (CD) based storage or a combination of such devices.

The data communication device(s) 660 each may be any devices suitable for enabling the processing system to communicate data with a remote processing system over a data communication link, such as a wireless transceiver or a conventional telephone modem, a wireless modem, an Integrated Services Digital Network (ISDN) adapter, a Digital Subscriber Line (DSL) modem, a cable modem, a satellite transceiver, an Ethernet adapter, or the like. At least one of communication links may be a wireless link, to provide communication between mobile devices and a wireless network.

In one embodiment the proxy gateway 130 converts between the languages and protocols used by the secure servers 150 on the wired network 140 and the languages and protocols used by the mobile devices 110. The secure servers 150 on the wired network 140 in one embodiment utilize HyperText Markup Language (HTML) and HyperText Transport Protocol (HTTP), while the mobile devices 110 utilize Wireless Markup Language (WML) and Wireless Access Protocol (WAP).

In one embodiment of the invention the proxy gateway 130 operates as a proxy for transmitting various requests from the mobile devices 110 to the servers on the wired network 140 and for transmitting responses from the servers to the mobile devices 110. One example of the proxy gateway 130 is the Mobile Access Gateway from Openwave Systems of Redwood City, California. It will be appreciated that while proxy gateway 130 is shown as a single entity, the proxy and gateway functions can be distributed between separate physical platforms.

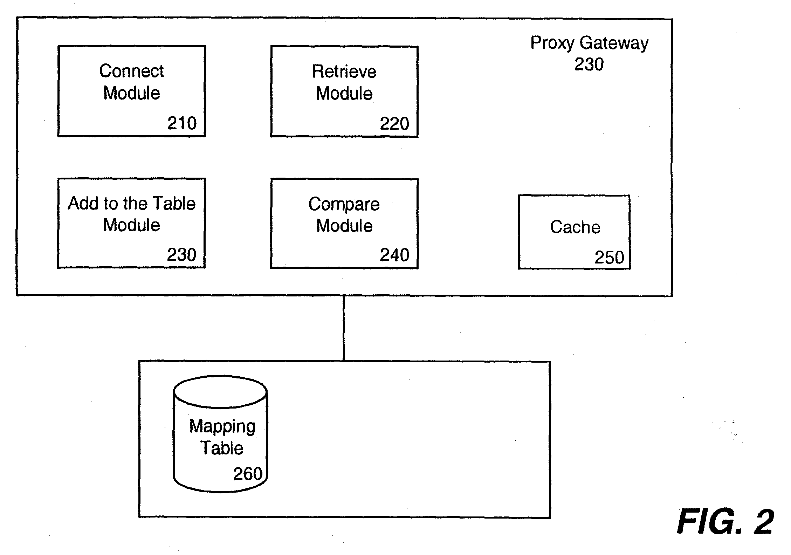

Components of the proxy gateway 130 are illustrated in Figure 2 according to one embodiment of the present invention. Upon a user of a mobile device 110 entering a domain name in an application running on the mobile device 110 or selecting a domain name from a list that may be presented on the mobile device 110, a connect module 210 of the proxy gateway 230 transmits the request to the secure server 150 of Figure 1 containing the user-requested site. The retrieve module 220 retrieves a domain name from a digital certificate transmitted by the secure server 150. Upon retrieval of the domain name, the compare module 240 compares the user-entered domain name to the domain name retrieved from the digital certificate and determines if an access to the server should be granted or denied. Functions of the additional components of the proxy gateway 230 will be apparent from the description that follows.

### Methodology

With these concepts in mind an embodiment of the present invention can be further explored. A user of the mobile device 110 of Figure 1 may specify a URL of a site to which he/she would like to obtain access. For example, the user-specified URL may be https://www.bankofmontreal.com. As stated earlier the connect module 210 of Figure 2 transmits the request to the secure server 150. For example, the secure server may be a server comprising contents of the Bank of Montreal site. In one embodiment the proxy gateway 230 translates the language and protocol used by the mobile device 110 to the language and protocol used by the secure server 150.

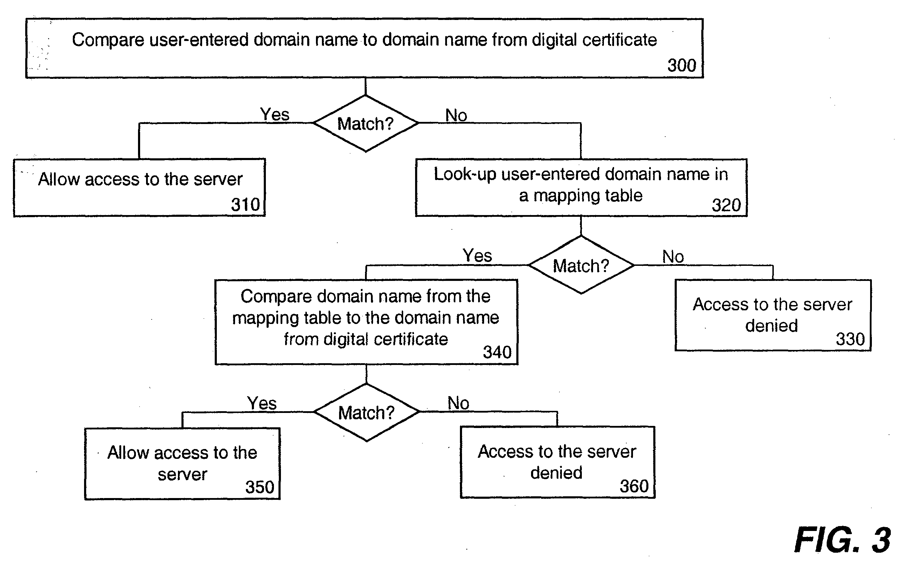

In one embodiment, the secure server 150 transmits a digital certificate to the proxy gateway 230 in order to identify itself. The retrieve module 220 retrieves a domain name from the digital certificate. Referring now to Figure 3, at 300 the compare module 240 of Figure 2 compares the domain name of the user-entered URL to the domain name in the digital certificate transmitted by the secure server 150. Matching domain names indicate that the intended secure server was contacted and the proxy gateway 230 transmits contents of the requested site to the mobile device to present the user with the requested site at 310. If the user-entered domain name and the domain name of the digital certificate do not match, then the compare module 240 accesses mapping table 260 of Figure 2.

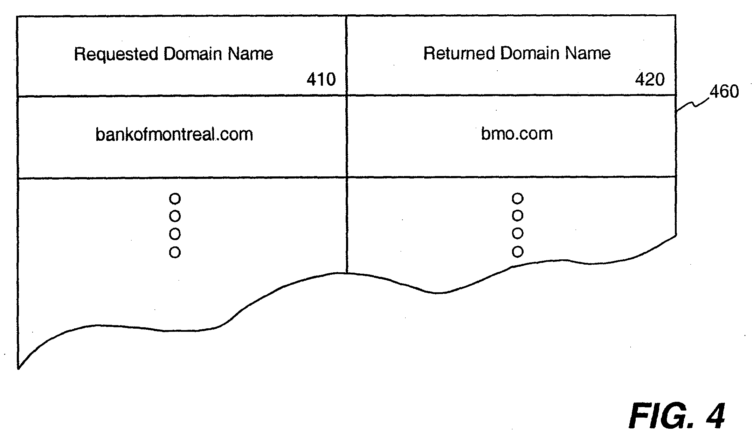

In one embodiment the mapping table 260 contains domain names corresponding to user-entered domain names, but not matching the user-entered domain names, that may be present in digital certificates transmitted by intended secure servers, i.e. secure servers referenced by the user-entered domain names. An exemplary embodiment of the mapping table 260 is illustrated in Figure 4. The mapping table 460 contains two fields, a requested domain name field 410 and a returned domain name field 420. The requested domain name field 410 contains domain names that may be requested by the user of the mobile device 110. The returned domain name field 420 contains domain names corresponding to the user-entered domain name, but not matching to user-entered domain name, that may be present in a digital certificate transmitted by a secure server, the contents of which the user intended to access. For example, the requested domain name field 410 of the mapping table 460 may contain the domain name www.bankofmontreal.com, and the corresponding returned domain name field 420 may contain a domain name www.bmo.com, indicating that a digital certificate containing the domain name www.bmo.com is transmitted by the intended secure server 150 comprising contents of the Bank of Montreal site, even though the user entered the domain name www.bankofmontreal.com.

In one embodiment if the user-entered domain name does not match the domain name retrieved from the digital certificate by the retrieve module 220, the compare module 240 accesses the mapping table 460 at 320 of Figure 3 and searches the requested domain name field 410 for a match to the user-entered domain name. It will be appreciated that any of a variety of searching algorithms well known in the art may be used to locate the match to the user-entered domain name in the mapping table 460. If no entry in the requested domain name field 410 matches the user-entered domain, then access to the secure server is denied at 330 of Figure 3, because there is no guarantee that the user will be contacting the intended secure server, not an intermediate site intercepting communicated information.

At 340 of Figure 3 if a match to the user-entered domain name was located in the requested domain name field 410 of the mapping table 460, then the compare module 240 compares the entries in the returned domain name field 420 of the mapping table, which correspond to the matched domain name in the requested domain name field 410, to the domain name retrieved from the digital certificate by the retrieve module 220. Any of a variety of techniques well known in the art may be used to compare domain names from the returned domain name field 420 to the domain name retrieved from the digital certificate. If the retrieved domain name matches one of the domain names from the returned domain name field 420 that correspond to the user-entered domain name, then the user is presented with the contents of the requested site at 350 of Figure 3. If there is no match found in the comparison process, then access to the secure server is denied to avoid man-in-the-middle attacks. In one embodiment the user is notified of access denial via a pop-up message screen on a mobile device display.

In one embodiment of the invention the domain names in the returned domain name field 420 of the mapping table 460 may support wildcard characters in order to simplify the process of mapping the user-requested domain name to a domain name of a site that may be accessed through variety of servers. For example, the Hotmail site may be accessed through a variety of servers assigned randomly to users attempting to access the site. A digital certificate transmitted by a hotmail server may contain a domain name "lc2.law5.hotmail.passport.com". In order to reduce contents of the mapping table 460 corresponding to the URL https://www.hotmail.com, an entry "*.*.hobnail.passport.com" may be added to the returned domain name field 460 corresponding to the requested domain name field 410 containing domain name hotmail.com.

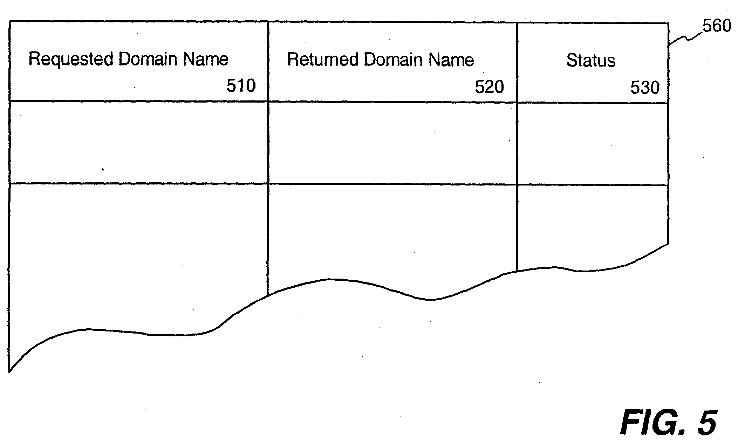

In one embodiment of the present invention illustrated in Figure 5, the mapping table 560 contains three fields, the requested domain name field 510, the returned domain name field 520 and a status field 530. The requested domain name field 510 and the returned domain name field 520 are described in detail in the foregoing description and do not require further explanation. The status field 530 may contain an Allow status entry, a Deny status entry or Pending status entry. The Allow status entry indicates that the corresponding domain name entries in the requested domain name field 510 and the returned domain name 520 were verified by a human operator and may be utilized in determining whether the intended secure server was contacted. In one embodiment if the mapping table 560 does not contain an entry corresponding to the user-entered domain name in the requested domain name field 510, the user-entered domain name is added to the mapping table 560 and the status field 530 corresponding to the requested domain name field 510 containing the added user-entered domain name is set to Pending. The returned domain name field 520 contains the domain name retrieved from the digital certificate transmitted by a server upon receipt of a request including the user-entered domain name. In this embodiment the operator analyzes the authenticity of the server and determines whether the status field 530 entry should be changed to the Allow status, causing the newly added domain names to be used in determination of whether the intended server was contacted. If the operator determines that the domain name retrieved from the digital certificate does not indicate that the intended secure server was contacted, the status field 530 entry is changed to Deny and the newly domain names are not utilized in the determination of whether the intended server was contacted. For example, if the user attempts to access https://www.bankofmontreal.com and the mapping table does not contain such an entry in the requested domain name field 510, then the domain name bankofmontreal.com may be added to the mapping table 560 with the status field 530 set to Pending. Upon the operator determining that the bmo.com retrieved from the digital certificate indicates that the server is an intended secure server, the operator changes the entry of the status field 530 to Allow.

In one embodiment of the present invention, the operator enters the entries in to the empty mapping table 560 upon its creation.

In one embodiment the proxy gateway 230 contains a cache 250 to expedite the determination whether the domain name retrieved from the digital certificate indicates that the intended server was contacted even though the user-entered domain name does not match the retrieved domain name. The contents of the cache may be searched prior to searching the mapping table 260. In one embodiment the contents of the cache 250 are the most recently requested domain names. In another embodiment the contents of the cache 250 are the most commonly/frequently requested domain names. Yet, in another embodiment the cache contains all entries of the mapping table.

In one embodiment the proxy gateway 230 contains two interfaces: one to communicate with the wireless network and the other to communicate with the wired network. It will be appreciated that the interfaces may be implemented in a single physical device.

It will be appreciated that the above-described technique is not limited to implementation in a proxy gateway, and any gateway coupling a wireless network to a wired network may be utilized. In addition, the above-described technique may be implemented in a network node that is not a gateway; for example the above-described technique may be implemented in a server that is not located directly in the request/reply path between the client and the secure server.

It will also be appreciated that the above-described invention is not limited to an implementation involving a mapping table, but may be implemented utilizing any data structure to comprise domain names.

It will be recognized that many of the features and techniques described above may be implemented in software. For example, the described operations may be carried out in the proxy gateway 230 or other suitable device in response to its processor(s) executing sequences of instructions contained in memory of the device. The instructions may be executed from a memory such as RAM 73 and may be loaded from a persistent store, such as a mass storage device, and/or from one or more other remote processing systems. Likewise, hardwired circuitry may be used in place of software, or in combination with software, to implement the features described herein. Thus, the present invention is not limited to any specific combination of hardware circuitry and software, nor to any particular source of software executed by the processing systems.

Thus, a method and apparatus for domain name validation have been described. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative sense rather than a restrictive sense.

## Claims

1. A method comprising:
maintaining in a network node a data structure that includes a set of domain names and at least one alternative domain name corresponding to each domain name from the set of domain names, the network node coupled to a wireless network and a wired network; and
using the data structure to validate a domain name associated with an attempted access to a network site on the wired network by a mobile device on the wireless network.

2. The method of claim 1 wherein the network node is a proxy gateway which proxies communications between mobile devices on the wireless network and sites on the wired network.

3. The method of claim 1 wherein the domain name associated with an attempted access to the network site is a domain name retrieved from a digital certificate transmitted by a server located on the wired network.

4. The method of claim 1 wherein the wired network is Internet.

5. The method of claim 3 wherein the server is a secure server.

6. The method of claim 1 wherein the data structure comprises at least two fields.

7. The method of claim 6 wherein a second field of the at least two fields comprises the at least one alternative domain name corresponding to a domain name in a first field of the at least two fields.

8. The method of claim 7 wherein using the data structure to validate the domain name comprises searching the second field for a domain name matching the domain name associated with the attempted access to the network site, the domain name in the second field corresponding to the domain name in the first field.

9. The method of claim 1 wherein the data structure is a mapping table.

10. The method of claim 8 wherein the domain name from the second field supports wildcard characters.

11. The method of claim 1 wherein using the data structure to validate a domain name associated with an attempted access to a network site on the wired network by a mobile device on the wireless network comprises:
obtaining a first domain name provided by the mobile device;
retrieving a second domain name from a digital certificate;
comparing the first domain name to the second domain name; and
accessing a data structure if the first domain name and the second domain name do not match.

12. The method of claim 11 wherein the digital certificate is transmitted by a server on the wired network.

13. The method of claim 12 wherein the wired network is the Internet.

14. The method of claim 12 wherein the server is a secure server.

15. , The method of claim 12 further comprising allowing the mobile device to access contents of the server if the first domain name and the second domain name match.

16. The method of claim 12 wherein the data structure comprises at least one domain name not matching to the first domain name, the at least one domain name corresponds to the first domain name and, if present in the digital certificate, indicates that the digital certificate was transmitted by a server referenced by the first domain name.

17. The method of claim 12 wherein the data structure comprises at least two fields.

18. The method of claim 17 wherein a second field of the at least two fields comprises at least one domain name corresponding to a domain name in a first field of the at least two fields.

19. The method of claim 18 further comprising searching the first field for a domain name matching the first domain name and searching the second field for a domain name matching the second domain name, the domain name from the second field corresponding to the domain name from the first field.

20. The method of claim 19 further comprising allowing the mobile device to access the server if the domain name from the second field matches the second domain name.

21. The method of claim 19 further comprising allowing the mobile device to access the server if the domain name from the second field matches the second domain name and a status of the first field and the second field is set to an allow status.

22. The method of claim 19 further comprising denying the mobile device an access to the server if the domain name from the second filed does not match the second domain name.

23. The method of claim 19 further comprising denying the mobile device an access to the server if a status of the first field and the second field is set to a deny status.

24. The method of claim 19 wherein the domain name from the second field supports wildcard characters.

25. The method of claim 11 wherein the data structure is a mapping table.

26. A processing system comprising:
a processor; and
a storage medium having stored therein instructions which, when executed by the processor, cause the processing system to perform a process comprising:
obtaining a first domain name entered by a client;
retrieving a second domain name from a digital certificate;
comparing the first domain name and the second domain name; and
accessing a data structure if the first domain name and the second domain name do not match.

27. The apparatus of claim 26 wherein the client is a mobile device connected to a wireless network.

28. The apparatus of claim 27 wherein the digital certificate is transmitted by a server on a wired network, the wired network coupled to the wireless network by the processing system.

29. The apparatus of claim 28 wherein the wired network is Internet.

30. The apparatus of claim 26 wherein the server is a secure server.

31. The apparatus of claim 26 wherein the processing system is a proxy gateway.

32. The apparatus of claim 26 wherein the method further comprises allowing the client to access contents of the server if the first domain name and the second domain name match.

33. The apparatus of claim 26 wherein the data structure comprises at least two fields.

34. The apparatus of claim 33 wherein a second field of the at least two fields comprises at least one domain name corresponding to a domain name in a first field of the at least two fields.

35. The apparatus of claim 34 wherein the method further comprises searching the first field for a domain name matching the first domain name and searching the second field for a domain name matching the second domain name, wherein the domain name from the second field corresponds to the domain name from the first field.

36. The apparatus of claim 35 wherein the method further comprising allowing the client to access the server only if the domain name from the second field matches the second domain name.

37. The apparatus of claim 35 wherein the domain name from the second field supports wildcard characters.
